# EUROPÄISCHE PATENTSCHRIFT

(11) **EP 2 254 745 B1**
(45) Veröffentlichungstag und Bekanntmachung des Hinweises auf die Patenterteilung: **14.09.2016**
(21) Anmeldenummer: 09717650.7
(22) Anmeldetag: 05.03.2009
(51) Int. Cl.: B29C 53/60

(54) **VERFAHREN ZUR HERSTELLUNG EINES MEHRSCHICHTIGEN ROHRS AUS KUNSTSTOFF SOWIE NACH DIESEM VERFAHREN HERGESTELLTES KUNSTSTOFFROHR**
METHOD FOR PRODUCING A MULTILAYER PIPE FROM PLASTIC AND PLASTIC PIPE PRODUCED ACCORDING TO SAID METHOD
PROCÉDÉ DE PRODUCTION D'UN TUBE MULTICOUCHE EN MATIÈRE PLASTIQUE, ET TUBE EN MATIÈRE PLASTIQUE FABRIQUÉ SUIVANT CE PROCÉDÉ

(30) Priorität: 06.03.2008 DE 102008012924
(43) Veröffentlichungstag der Anmeldung: 01.12.2010
(73) Patentinhaber: egeplast international GmbH, 48268 Greven (DE)
(72) Erfinder: SPÄTH, Thorsten, Dr., 48282 Emsdetten (DE); STRANZ, Michael, Dr., 48432 Rheine (DE)
(74) Vertreter: Fritz, Edmund Lothar
(86) Internationale Anmeldenummer: PCT/EP2009/052569
(87) Internationale Veröffentlichungsnummer: WO 2009/109609

(56) Entgegenhaltungen:
- EP-A- 0 311 400
- EP-A- 1 319 823

## Beschreibung

Die vorliegende Erfindung betrifft ein Verfahren zur Herstellung eines mehrschichtigen Rohrs aus Kunststoff umfassend die Aufbringung mindestens eines Kunststoffbands auf ein Trägerbauteil aus Kunststoff, wobei das mindestens eine Kunststoffband nach der Aufbringung mit dem Trägerbauteil verschweißt wird, wobei als Trägerbauteil ein zylindrischer Rohrkern dient, auf den mindestens eine Verstärkungsschicht umfassend das mindestens eine Kunststoffband aufgebracht wird, welches aus einem Kunststoff besteht, der einen negativen Wärmeausdehnungskoeffizienten aufweist, wobei das mindestens eine Kunststoffband in einem Winkel von 45 ° zur Rohrachse oder flacher auf den zylindrischen Rohrkern aufgewickelt wird und das mindestens eine Kunststoffband durch Verstrecken eine Orientierung in mindestens einer Richtung erhalten hat.

Es ist bekannt, dass Rohre aus Kunststoff gegenüber metallischen Rohren den Nachteil haben, dass sie eine vergleichsweise hohe Wärmeausdehnung aufweisen. So liegen beispielsweise die Wärmeausdehnungskoeffizienten der im Rohrleitungsbau verwendeten Kunststoffe Polyethylen und Polypropylen mit 0,2 mm/mK bzw. 0,18 mm/mK bei etwa dem zehnfachen Wert verglichen mit dem Wärmeausdehnungskoeffizienten von Metallen wie zum Beispiel Aluminium oder Kupfer (0,02 bzw. 0,017 mm/mK).

Sowohl die Temperatur der in einer Rohrleitung geförderten Medien als auch die äußeren Temperaturunterschiede, bedingt durch den Tag/Nacht-Wechsel bzw. den Wechsel der Jahreszeiten führen zu teilweise erheblichen Längenänderungen bei einer verlegten Rohrleitung. Besonders Rohrleitungssysteme unter Sonneneinstrahlung oder bei Frosteinwirkung müssen ausreichende Kompensationselemente aufweisen. Aus den hohen Biegespannungen bei Dehnungsbogen sowie großen Kräften an den Einspannstellen (Rohrfestpunkte) resultiert ein erhebliches Gefährdungspotential.

Die erhöhte Wärmeausdehnung bei Rohren aus Kunststoff führt außerdem zu einem Mehraufwand bei der Verlegetechnik, da beispielsweise Dehnungsbogen und festere Halterungen benötigt werden. Neben Dehnungsbogen für den Längenausgleich werden noch Axialkompensatoren für die Aufnahme von Längenänderungen in der Rohrachse verwendet, die jedoch nur in Verbindung mit Zugstangen Längskräfte aufnehmen können. Daneben gibt es noch Lateralkompensatoren zur Aufnahme von Bewegungen in axialer Richtung und quer zur Rohrachse. Weiterhin werden Angularkompensatoren als Gelenkkomponenten verwendet für den Ausgleich großer Längenänderungen in ebenen und räumlichen Rohrleitungssystemen, wobei die Längenänderung durch eine Abwinklung von Rohrstrecken kompensiert wird.

Eine mögliche Lösung zur Kompensation der Längenänderungen, die im Stand der Technik vorgeschlagen wurde, ist die Verwendung von Kunststoffverbundrohren mit metallischen Zwischenlagen. Die Metallschicht dient in erster Linie als Sauerstoffbarriere für Rohrleitungen im Bereich der Heizungs- und Sanitärtechnik. Als weiterer Effekt verringern solche metallischen Zwischenschichten auch die temperaturbedingte Längenausdehnung der Verbundrohre. Es ergibt sich daher eine gemittelte Längenausdehnung, die geringer ist als diejenige reiner Kunststoffrohrleitungen.

Bei der Verwendung von Rohrleitungen, die ausschließlich aus Kunststoff bestehen, wie sie zum Beispiel für Leitungen für den Transport von Wasser, Abwasser, Gas, Kohlenwasserstoffen, Chemikalien oder anderer flüssiger oder gasförmiger Medien, insbesondere im Außenbereich aber auch innerhalb von Gebäuden verwendet werden, bleibt jedoch das eingangs genannte Problem der vergleichsweise hohen Wärmeausdehnung bestehen. Hier setzt die vorliegende Erfindung ein.

Aus der DE 601 21 779 T2 ist es grundsätzlich bekannt, Verbundrohre aus Kunststoff mit erhöhter Druckfestigkeit herzustellen, indem man auf ein rohrförmiges Trägerbauteil wenigstens ein Verstärkungsband aus Kunststoff spiralförmig aufwickelt. Dabei verwendet man ein Verstärkungsband, welches eine Orientierung beispielsweise in Längsrichtung aufweist. Eine solche Orientierung des Kunststoffbands kann man durch vorheriges Verstrecken (Dehnen) vor dem Aufwickeln erreichen. In der genannten Druckschrift wird auch beschrieben, dass beim Erwärmen eines Kunststoffrohrs, bei dem ein solches orientiertes Band auf eine Kernschicht (Trägerschicht) aufgewickelt wurde, eine Schrumpfspannung dadurch erzeugt wird, dass sich das spiralförmig aufgewickelte Verstärkungsband bei Erwärmung zusammenzieht. Dieser Effekt wird in dem genannten Stand der Technik dazu genutzt, schmelzflüssigen Kunststoff aus einer Deckschicht in Spalte zwischen den einzelnen Wicklungen des Verstärkungsbands zu pressen und auf diese Weise diese Spalte zu verschließen. Der Schrumpfeffekt wird also bei der Herstellung eines zur Erhöhung der Druckfestigkeit verstärkten mehrschichtigen Kunststoffrohrs genutzt. Es wird in dieser Schrift jedoch nicht auf die Eigenschaften des Rohrs nach dessen Verlegung im Erdreich eingegangen. Insbesondere fehlt es an Überlegungen zur axialen Längenausdehnung einer verlegten Rohrleitung, die aus verstärkten Kunststoffrohren besteht.

Die EP-A-0 311 400 beschreibt ein Verfahren zur Herstellung eines mehrschichtigen Rohrs aus Kunststoff umfassend die Aufbringung mindestens eines Kunststoffbands auf ein Trägerbauteil aus Kunststoff, wobei das Kunststoffban nach der Aufbringung mit dem Trägerbauteil verschweißt wird. Die Herstellung des Rohrs erfolgt hier auf einem Kern aus Stahl, wobei das Rohr unter Verwendung zweier Komponenten, nämlich eines Kunstharzes sowie Karbonfasern zur Verstärkung in einer Form gegossen wird. Es handelt sich somit hier um ein diskontinuierliches Herstellungsverfahren, mittels dessen sich nur Rohre von jeweils endlicher Länge herstellen lassen. Für eine kostengünstige kontinuierliche Fertigung endloser Rohre ist das bekannte Verfahren daher nicht geeignet. Da bei der Herstellung Karbonfasern in den Kunststoff eingebettet werden, ist ein so hergestelltes Rohr zudem nicht werkstoffhomogen.

Die Aufgabe der vorliegenden Erfindung besteht darin, ein Verfahren zur Herstellung eines mehrschichtigen Rohrs aus Kunststoff zur Verfügung zu stellen, welches die Herstellung von Rohrleitungen aus Kunststoff mit verringerter axialer Wärmeausdehnung ermöglicht.

Die Lösung dieser Aufgabe liefert ein Verfahren zur Herstellung eines Rohrs aus Kunststoff der eingangs genannten Gattung mit den Merkmalen des Anspruchs 1.

Erfindungsgemäß ist vorgesehen, dass der Verstreckgrad des mindestens einen aufgebrachten orientierten Kunststoffbands und der Winkel, in dem das mindestens eine Kunststoffband auf den zylindrischen Rohrkern aufgewickelt wird, derart gewählt werden, dass die axiale Spannungskomponente der Verstärkungsschicht oder die Summe der axialen Spannungskomponenten der Verstärkungsschichten bei Erwärmung die axiale Spannungskomponente der Rohrkernschicht oder die Summe der axialen Spannungskomponenten der Rohrkernschicht und gegebenenfalls weiterer Rohrschichten mindestens teilweise kompensiert, wobei das mindestens eine Kunststoffband mindestens eine Schicht eines in mindestens einer Richtung hochorientierten Kunststoffs umfasst und das mindestens eine Kunststoffband und der zylindrische Rohrkern aus einem chemisch ähnlichen Kunststoff bestehen.

Gemäß einer bevorzugten Weiterbildung der Erfindung wird das Dickenverhältnis der einzelnen Rohrschichten zueinander derart gewählt, dass die axiale Spannungskomponente der Verstärkungsschicht oder die Summe der axialen Spannungskomponenten der Verstärkungsschichten bei Erwärmung die axiale Spannungskomponente der Rohrkernschicht oder, sofern weitere Rohrschichten vorhanden sind, die Summe der axialen Spannungskomponenten der Rohrkernschicht und der weiteren Rohrschichten mindestens teilweise kompensiert.

Unter "weiteren Rohrschichten" im Sinne der vorgehenden Definition werden Rohrschichten verstanden, die nicht Bestandteil des Rohrkerns sind, von dem ausgegangen wird, sondern später aufgebracht werden, beispielsweise als Deckschichten oder Mantelschichten, die eine oder mehrere Verstärkungsschichten überziehen oder aber auch als Zwischenschichten, wobei diese "weiteren Rohrschichten" aus Werkstoffen bestehen, die einen positiven Wärmeausdehnungskoeffizienten aufweisen, so dass deren Beitrag zu einer "theoretischen" Längenzunahme der Rohrleitung durch die Verstärkungsschichten kompensiert werden muss. Selbstverständlich kann auch der Rohrkern, auf den Verstärkungsschichten aufgebracht werden, bereits aus mehreren Schichten bestehen.

Auf diese Weise lässt sich die axiale Längenausdehnung eines solchen Kunststoffrohrs bzw. einer verlegten Rohrleitung, die aus solchen miteinander verbundenen Kunststoffrohren besteht, im Betrieb gegenüber einem herkömmlichen Kunststoffrohr, bestehend aus dem Werkstoff der Kernschicht, verringern. Im Rahmen der vorliegenden Erfindung geht es wohlgemerkt nicht um den Schrumpfungseffekt eines verstreckten Kunststoffbands bei Erwärmung während der Herstellung der Rohrleitung, sondern um die Kompensation einer bei herkömmlichen Kunststoffrohrleitungen auftretenden axialen Längenausdehnung im Betrieb der verlegten Rohrleitung, die den Einflüssen der Witterung (Temperaturschwankungen) ausgesetzt ist.

Vorzugsweise werden das Dickenverhältnis der einzelnen Rohrschichten zueinander und/oder der Verstreckgrad eines aufgebrachten orientierten Kunststoffbands und/oder der Winkel, in dem ein Kunststoffband auf den Rohrkern aufgebracht, insbesondere aufgewickelt wird, derart gewählt, dass die axiale Spannungskomponente der Verstärkungsschicht oder die Summe der axialen Spannungskomponenten der Verstärkungsschichten bei Erwärmung dem Betrag nach in etwa der axialen Spannungskomponente der Rohrkernschicht oder der Summe der axialen Spannungskomponenten der Rohrkernschicht und gegebenenfalls weiterer Rohrschichten entspricht, jedoch mit entgegengesetztem Vorzeichen. In diesem Fall können sich die Spannungskomponenten praktisch vollständig kompensieren, so dass das Kunststoffrohr bei Erwärmung keine oder keine nennenswerte axiale Längenausdehnung aufweist.

Es stehen erfindungsgemäß verschiedene Parameter zur Verfügung, um die Tendenz des Kernrohrs, sich bei Wärme in axialer Richtung auszudehnen, durch eine oder mehrere Verstärkungsschichten zu kompensieren. In einer Rohrleitung, bei der die Rohrabschnitte aus mehreren fest (stoffschlüssig) miteinander verbundenen Schichten bestehen, führt die Tendenz einer Kernrohrschicht, sich bei Erwärmung auszudehnen, dazu, dass eine axiale Spannungskomponente entsteht. Wenn die mit der Kernrohrschicht fest verbundene diese koaxial umgebende Verstärkungsschicht aus einem Werkstoff mit negativem Wärmeausdehnungskoeffizienten besteht, erzeugt dies eine entsprechende in der Richtung gegenläufige axiale Spannungskomponente. Wenn man die genannten Parameter so wählt, dass sich diese Spannungskomponenten genau kompensieren, liegt der Idealfall vor und das Rohr hat insgesamt keine axiale Längenausdehnung mehr bei Erwärmung.

Der erste Parameter ist die jeweilige Dicke (Materialstärke) der Verstärkungsschicht im Verhältnis zur Kernschicht. Wenn die negative Wärmeausdehnung einer gewickelten Verstärkungsschicht nicht ausreicht, kann man beispielsweise eine weitere Verstärkungsschicht auf die erste aufwickeln und so die Schichtdicke der Verstärkungsschichten insgesamt erhöhen. Wichtig ist dabei, dass die Verstärkungsschichten jeweils mit dem Kernrohr bzw. untereinander stoffschlüssig verbunden werden, damit es nicht zu Ablösungseffekten durch Scherkräfte aufgrund der unterschiedlichen auftretenden axialen Spannungen der Schichten bei Erwärmung kommt. Man kann natürlich auch je nach Bedarf unterschiedlich dicke orientierte verstreckte Verstärkungsbänder wählen.

Ein zweiter Parameter ist der Winkel zur Rohrachse, mit dem ein Verstärkungsband spiralförmig auf den Rohrkern aufgewickelt wird. Je flacher dieser Winkel ist, desto stärker geht der Beitrag des spiralförmig aufgewickelten Bands in die daraus resultierende axiale Komponente ein. Wird beispielsweise ein Verstärkungsband mit einem Winkel von 45 ° zur Rohrachse auf einen zylindrischen Rohrkern aufgewickelt, dann ist die Komponente in Achsrichtung des Rohrs gleich dem cos 45 ° multipliziert mit der Länge des aufgewickelten Bandes, das heißt die in axialer Richtung wirksame Komponente der aus der negativen Wärmeausdehnung entstehenden Spannung entspricht ungefähr dem 0,7 fachen der in Bandrichtung des Verstärkungsbands wirksamen Komponente. Bei einem Winkel von 60 °zur Rohrachse wäre hingegen nur der Faktor 0,5 gegeben. Ein flacherer Winkel führt somit zu einem höheren Beitrag zur Kompensation der Längenausdehnung der Kernschicht.

Als dritter Parameter spielt der Grad der Verstreckung bei der Herstellung eines orientierten Verstärkungsbands eine Rolle. Je höher dieser Verstreckungsgrad ist, desto höher wird die Tendenz eines solchen Verstärkungsbands, sich bei Erwärmung zusammen zu ziehen. Im Verbund mit der Kernschicht wird somit bei höherem Verstreckungsgrad eine entsprechend höhere axiale Spannungskomponente erzielt, die auf eine Kontraktion hinwirkt, so dass man in stärkerem Maße die Neigung der Kernschicht zur Ausdehnung kompensieren kann.

Wenn neben der Kernschicht weitere äußere Schichten des Verbundrohrs vorhanden sind, deren Werkstoff einen positiven Wärmeausdehnungskoeffizienten in axialer Richtung aufweist, muss auch dies bei Anzahl, Schichtdicke, Verstreckungsgrad und Aufbringungswinkel der Wicklung der orientierten verstreckten Verstärkungsschichten berücksichtigt werden.

Auf diese Weise wird ein Verbund geschaffen aus Materialien mit jeweils unterschiedlichen Eigenschaften im Hinblick auf die Wärmeausdehnung. Dadurch entstehen bei Erwärmung die entsprechenden axialen Spannungskomponenten in den einzelnen Schichten und es lässt sich eine verringerte gemittelte Wärmeausdehnung in axialer Richtung des Bauteils insgesamt erzielen. Gleichzeitig ergibt sich aber auch ein Bauteil, welches in sich werkstoffhomogen ist, was erhebliche Vorteile hat gegenüber einem Verbundrohr aus metallischen Werkstoffen und Kunststoffen. Die erfindungsgemäße Lösung macht es beispielsweise möglich, Materialien aus chemisch verwandten oder sogar chemisch weitgehend identischen Kunststoffen einzusetzen, die aber eine unterschiedliche Wärmeausdehnung aufweisen, so dass der genannte Effekt der sich gegenseitig aufhebenden Wärmeausdehnung der einzelnen Komponenten bei zueinander völlig kompatiblen Werkstoffen erzielt werden kann. Dadurch werden jegliche Probleme des Verbunds im Grenzbereich von Schichten aus unterschiedlichen Werkstoffen vermieden. Hinsichtlich weiterer wichtiger Eigenschaften des Bauteils wie mechanische Festigkeit, Druckfestigkeit, Langzeitbeständigkeit, Dichtigkeit gegen die transportierten Fluide und dergleichen ist ein solcher werkstoffhomogener Aufbau sehr vorteilhaft. Die Grenzflächenbereiche zwischen einzelnen Bauteilen oder Schichten aus verschiedenen Werkstoffen stellen sonst immer ein Undichtigkeitsrisiko gegenüber transportierten Fluiden dar.

Eine Verringerung der gesamten axialen Längenzunahme des mehrschichtigen Kunststoffrohrs bei Erwärmung lässt sich erreichen, wenn der Kunststoff des mindestens einen Kunststoffbands eine negative Wärmeausdehnung aufweist (sich bei Wärmeeinwirkung zusammenzieht). Dadurch lässt sich die positive Wärmeausdehnung (also die zu erwartende Ausdehnung bei Erwärmung) des rohrförmigen Kerns (Trägerbauteils) ganz oder teilweise kompensieren. Die gemittelte Wärmeausdehnung des gesamten Bauteils ist dann in jedem Fall geringer als diejenige eines vergleichbaren Bauteils, welches lediglich aus dem Werkstoff des Trägerbauteils besteht. Im Idealfall werden die zuvor genannten Parameter so gewählt, dass die axiale Längenzunahme des Rohrs bei Erwärmung gegen null geht, wenn die Spannungskomponente des Kernrohrs mit Tendenz zur Ausdehnung durch geeignete Verstärkungsschichten völlig kompensiert wird.

Es kann beispielsweise auch so sein, dass die negative Wärmeausdehnung des Kunststoffs des mindestens einen Kunststoffbands reversibel ist, das heißt, dass der Kunststoff sich bei Abkühlung wieder ausdehnt. Dies führt dazu, dass bei zum Beispiel klimabedingten Temperaturschwankungen der gewünschte Effekt der gemittelten verringerten Wärmeausdehnung bei Erwärmung immer wieder auftritt, da bei einer Abkühlung das Bauteil zu seinen ursprünglichen Maßen zurückkehrt. Der Werkstoff des Trägerbauteils zieht sich bei der Abkühlung zusammen, während sich der Werkstoff des auf das Trägerbauteil aufgebrachten Kunststoffbands ausdehnt.

Vorzugsweise werden für das Kunststoffband Kunststoffe eingesetzt, die in mindestens einer Richtung hochorientiert sind. Eine solche Orientierung in mindestens einer Ausdehnungsrichtung eines solchen Kunststoffbands kann zum Beispiel durch Verstrecken vor der Aufbringung erzielt werden. Dazu kann eine Kaltverstreckung nach der Extrusion vorgenommen werden. Unter "Kaltverstreckung" wird dabei eine Verstreckung verstanden, die durchaus bei einer gegenüber der Raumtemperatur erhöhten Temperatur vorgenommen werden kann, die jedoch um einiges unterhalb der Schmelztemperatur des Kunststoffs des Kunststoffbands erfolgt. Vorzugsweise werden dabei Temperaturen gewählt, die in einem Temperaturbereich von zwischen etwa 10 ° und etwa 50 °, weiter vorzugsweise zwischen etwa 10 ° und etwa 20 ° unterhalb der Schmelztemperatur des Kunststoffs liegen.

Die Erfindung kommt bei Kunststoffrohren zur Anwendung, das heißt, das Trägerbauteil ist rohrförmig (zylindrischer Rohrkern) und auf ein solches rohrförmiges Trägerbauteil wird ein Kunststoffband mit den gewünschten Eigenschaften hinsichtlich der Wärmeausdehnung aufgewickelt oder aufgelegt. Es können zum Beispiel mindestens zwei Lagen verstreckter in mindestens einer Richtung orientierter Kunststoffbänder nacheinander, einander überdeckend auf das Trägerbauteil aufgebracht werden. Diese beiden Lagen können beispielsweise im entgegen gesetzten Drehsinn auf das Trägerbauteil aufgewickelt werden. Dabei sollte jedoch vorzugsweise der Winkel zur Rohrachse vergleichsweise flach sein. Ebenso gut können aber auch Bänder (oder nur ein Band) aus Kunststoff in Längsrichtung (axialer Richtung) auf das Trägerbauteil aufgelegt werden, um dann anschließend mit dem Kunststoff des Trägerbauteils verschweißt zu werden, so dass sich ein homogener Werkstoffverbund ergibt. Wenn nicht spiralförmig aufgewickelt sondern in axialer Richtung aufgelegt wird, ist der cos des Winkels gleich 1, so dass die Kontraktion des Verstärkungsbands in vollem Umfang in die axiale Komponente eingeht.

Die Werte für die jeweilige Wärmeausdehnung von Trägerbauteil einerseits und aufgebrachtem Band oder Bändern andererseits sollten so gewählt werden, dass der gewünschte Effekt einer Verringerung der Wärmeausdehnung des herzustellenden Bauteils so gut wie möglich erreicht wird. Vorzugsweise ist es daher so, dass mindestens ein Kunststoffband aus einem Kunststoff mit einer Wärmeausdehnung derart ausgewählt wird, dass die (theoretische) Längenzunahme des Trägerbauteils nach der Aufbringung des Kunststoffbands auf das Trägerbauteil bei Erwärmung durch die (theoretische) Kontraktion des Verstärkungsbands weitgehend kompensiert wird. Tatsächlich kommt es dann nicht mehr zu einer axialen Längenzunahme, sondern es werden in den einzelnen Schichten lediglich einander kompensierende Spannungskomponenten erzeugt.

Werden nacheinander mehrere Kunststoffbänder auf ein Trägerbauteil aufgebracht, wobei die Kunststoffbänder auch gegebenenfalls eine unterschiedliche Orientierung aufweisen können, ist es vorzugsweise so, dass mehrere nacheinander aufzubringende Kunststoffbänder jeweils aus Kunststoffen mit Wärmeausdehnung derart ausgewählt werden, dass die (theoretische) Längenzunahme des Trägerbauteils bei Erwärmung durch die Mehrzahl der aufgebrachten Kunststoffbänder weitgehend kompensiert wird. Das erfindungsgemäße Verfahren ermöglicht es daher, rohrförmige Bauteile herzustellen, die gegenüber herkömmlichen Rohren aus Kunststoff eine stark verringerte Wärmeausdehnung oder sogar so gut wie überhaupt keine Wärmeausdehnung (Längenänderung bei Erwärmung) mehr aufweisen.

Gegenstand der vorliegenden Erfindung sind weiterhin Bauteile aus Kunststoff, die nach einem Verfahren der hierin genannten Art hergestellt wurden. Gegenstand der vorliegenden Erfindung sind insbesondere nach einem erfindungsgemäßen Verfahren hergestellte rohrförmige Bauteile aus Kunststoff, die in sich werkstoffhomogen oder weitgehend werkstoffhomogen aufgebaut sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine Ansicht eines Kunststoffrohrs mit verringerter Wärmeausdehnung gemäß einer möglichen beispielhaften Ausführungsvariante der vorliegenden Erfindung in einer Phase des Herstellungsverfahrens;
Figur 2 eine Darstellung eines fertigen nach dem erfindungsgemäßen Verfahren hergestellten Kunststoffrohrs im Längsschnitt.

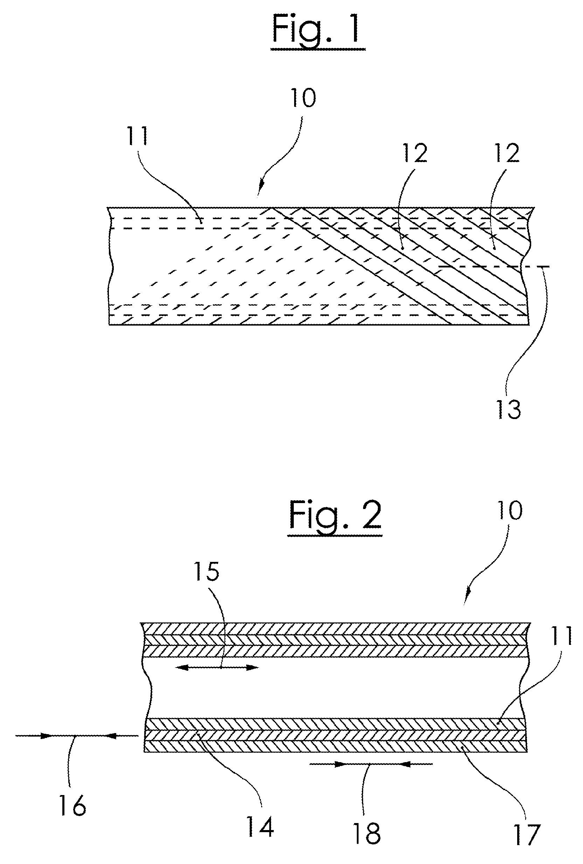

Zunächst wird auf die Figur 1 Bezug genommen. Die Darstellung zeigt eine vereinfachte schematische Ansicht eines Kunststoffrohrs, welches insgesamt mit dem Bezugszeichen 10 bezeichnet ist. Das Kunststoffrohr 10 ist hier in einer Zwischenphase der Herstellung dargestellt. Es handelt sich um ein nach den ersten Verfahrensschritten zunächst noch zweischichtiges Rohr aus Kunststoff, welches hergestellt wird ausgehend von einem in einem ersten Verfahrensschritt hergestellten rohrförmigen Träger 11, der zum Beispiel nach einem üblichen Verfahren durch Extrusion aus einem Kunststoff wie zum Beispiel einem Polyolefin hergestellt wird. Der rohrförmige Träger 11 kann aus einem Kunststoff ohne Orientierung bestehen. Auf diesen rohrförmigen zylindrischen Träger 11 werden dann Bänder 12 aus einem in einer Richtung orientierten Kunststoff aufgewickelt, insbesondere in einem vergleichsweise flachen Winkel zur Rohrachse 13 wie in Figur 1 dargestellt. Die Bänder 12 werden spiralförmig um den rohrförmigen Träger 11 gewickelt, derart, dass jeweils benachbarte Bänder 12 aneinander grenzen, das heißt auf Stoß angeordnet sind. Diese Bänder 12 können aus einem chemisch ähnlichen Kunststoff bestehen wie der Träger 11, beispielsweise ebenfalls aus einem Polyolefin, insbesondere aus dem gleichen Polyolefin wie der Träger. Die Bänder erhalten ihre Orientierung in mindestens einer Richtung dadurch, dass sie zuvor verstreckt werden, wozu sie auf eine Temperatur erwärmt werden, die um einiges unterhalb der Schmelztemperatur des jeweiligen Kunststoffs liegt und dann gezogen werden, so dass sie sich dehnen. Dies geschieht zum Beispiel mittels einer Anordnung von Walzen umfassend Walzenpaare, die mit unterschiedlicher Geschwindigkeit laufen und das Band transportieren, so dass dieses in Längsrichtung gedehnt wird.

Nach dem Verstrecken werden die so gewonnen orientierten Bänder 12 aus Kunststoff auf den rohrförmigen Träger gewickelt und danach mit diesem fest verschweißt, was zum Beispiel mit Hilfe von Laserstrahlung geschehen kann. Dabei wird ein fester Verbund mit einem dann zweischichtigen Rohr aus dem Träger und der aus den Bändern gebildeten zweiten äußeren Schicht geschaffen. Durch die Verstreckung haben die Bänder eine andere Wärmeausdehnung als das Trägerrohr. Bei Erwärmung haben sie nämlich die Neigung, sich zusammen zu ziehen. Das Trägerrohr (Rohrkern) 11 besteht hingegen aus einem nicht orientierten gewöhnlichen Kunststoff, welcher sich bei Erwärmung vergleichsweise stark ausdehnt. Bei Erwärmung eines solchen zweischichtigen Rohrs ergibt sich dann der Effekt, dass die Längenzunahme des rohrförmigen Trägers 11 (des Kernrohrs) durch die Längenabnahme der äußeren aus den Bändern 12 gebildeten Schicht kompensiert wird, so dass das Gesamtrohr eine geringere Wärmeausdehnung aufweist als ein Kunststoffrohr, welches allein aus einem Kunststoff des im Trägerrohr 11 verwendeten Typs besteht, oder überhaupt keine Wärmeausdehnung in axialer Richtung (in Längenrichtung).

Nach der Aufbringung der Bänder aus orientiertem Kunststoff wird dann das in Figur 1 gezeigte Rohr in einem weiteren Arbeitsgang mit einer dritten äußeren Schicht aus Kunststoff überzogen, die beispielsweise auf die aus den Bändern 12 gebildete mittlere Schicht aufextrudiert wird. Diese dritte Schicht dient in erster Linie dazu, ein Rohr mit einer einheitlichen glatten Oberfläche zu schaffen, was zum Beispiel benötigt wird, um derartige Rohre über Muffen oder andere Verbindungselemente untereinander zu verbinden. Die Oberfläche des zweischichtigen Rohrs nach dem Aufwickeln und Verschweißen der Bänder 12 ist hingegen nicht ausreichend eben. Die dritte Schicht bildet dann eine abschließende Deckschicht des Rohrs. Diese dritte Schicht kann beispielsweise aus einem nicht orientierten Kunststoff bestehen, der dann wieder eine Längenausdehnung bei Erwärmung aufweist wie ein herkömmlicher Kunststoff.

Figur 2 zeigt den Längsschnitt durch ein solches dreischichtiges Rohr 10 gemäß der vorliegenden Erfindung nach dem Aufwickeln und Verschweißen der Bänder 12 und nach der Aufbringung der dritten äußeren Schicht 17. Dieses Rohr besteht dann aus der Innenschicht 11, die aus dem Trägerrohr 11 entstanden ist, aus einer zweiten mittleren Schicht 14, die aus den zuvor aufgebrachten Bändern entstanden ist, und aus der dritten äußeren Deckschicht 17, die zum Beispiel anschließend aufextrudiert wurde. Durch die Pfeile 15 bzw. 16 und 18 ist angedeutet, dass die innere Schicht 11 versucht, sich bei Erwärmung in Längenrichtung auszudehnen, während die mittlere Schicht 14 eine Tendenz zur Längenschrumpfung bei Erwärmung aufweist und die äußere Schicht 17 wiederum eine Tendenz zur Längendehnung. Dadurch werden entsprechende Spannungskomponenten erzeugt, die sich gegenseitig kompensieren. Der besondere Vorteil des erfindungsgemäßen Verfahrens liegt darin, dass auf diese Weise werkstoffhomogene Kunststoffrohre mit verringerter Wärmeausdehnung erhältlich sind, wobei die mittlere orientierte Schicht 14 die Wärmeausdehnung der beiden anderen Schichten 11 und 17 kompensieren kann.

### Bezugszeichenliste

- 10: Kunststoffrohr
- 11: rohrförmiger Träger
- 12: Bänder aus Kunststoff
- 13: Rohrachse
- 14: mittlere Schicht
- 15: Pfeile
- 16: Pfeile
- 17: äußere Schicht
- 18: Pfeile

## Patentansprüche

1. Verfahren zur Herstellung eines mehrschichtigen Rohrs aus Kunststoff umfassend die Aufbringung mindestens eines Kunststoffbands auf ein Trägerbauteil aus Kunststoff, wobei das mindestens eine Kunststoffband nach der Aufbringung mit dem Trägerbauteil verschweißt wird, wobei als Trägerbauteil ein zylindrischer Rohrkern (11) dient, auf den mindestens eine Verstärkungsschicht umfassend das mindestens eine Kunststoffband (12) aufgebracht wird, welches aus einem Kunststoff besteht, der einen negativen Wärmeausdehnungskoeffizienten aufweist, wobei das mindestens eine Kunststoffband (12) in einem Winkel von 45 ° zur Rohrachse oder flacher auf den zylindrischen Rohrkern (11) aufgewickelt wird und das mindestens eine Kunststoffband (12) durch Verstrecken eine Orientierung in mindestens einer Richtung erhalten hat, wobei der Verstreckgrad des mindestens einen aufgebrachten orientierten Kunststoffbands (12) und der Winkel, in dem das mindestens eine Kunststoffband auf den zylindrischen Rohrkern (11) aufgewickelt wird, derart gewählt werden, dass die axiale Spannungskomponente der Verstärkungsschicht oder die Summe der axialen Spannungskomponenten der Verstärkungsschichten bei Erwärmung die axiale Spannungskomponente der Rohrkernschicht oder die Summe der axialen Spannungskomponenten der Rohrkernschicht und gegebenenfalls weiterer Rohrschichten mindestens teilweise kompensiert,
wobei das mindestens eine Kunststoffband (12) mindestens eine Schicht eines in mindestens einer Richtung hochorientierten Kunststoffs umfasst und das mindestens eine Kunststoffband (12) und der zylindrische Rohrkern (11) aus einem chemisch ähnlichen Kunststoff bestehen.

2. Verfahren nach Anspruch 1, **dadurch gekennzeichnet, dass** das Dickenverhältnis der einzelnen Rohrschichten zueinander derart gewählt wird, dass die axiale Spannungskomponente der Verstärkungsschicht oder die Summe der axialen Spannungskomponenten der Verstärkungsschichten bei Erwärmung die axiale Spannungskomponente der Rohrkernschicht oder die Summe der axialen Spannungskomponenten der Rohrkernschicht und gegebenenfalls weiterer Rohrschichten mindestens teilweise kompensiert.

3. Verfahren nach Anspruch 1 oder 2, **dadurch gekennzeichnet, dass** die negative Wärmeausdehnung des Kunststoffs des mindestens einen Kunststoffbands (12) reversibel ist, das heißt, dass der Kunststoff sich bei Abkühlung wieder ausdehnt.

4. Verfahren nach einem der Ansprüche 1 bis 3, **dadurch gekennzeichnet, dass** das mindestens eine Kunststoffband (12) eine Orientierung in mindestens einer Richtung erhalten hat durch eine Kaltverstreckung nach der Extrusion des Kunststoffbands, die vorzugsweise in einem Temperaturbereich von zwischen etwa 10 ° und etwa 50 °, weiter vorzugsweise zwischen etwa 10 ° und etwa 20 ° unterhalb der Schmelztemperatur des Kunststoffs erfolgt.

5. Verfahren nach einem der Ansprüche 1 bis 4, **dadurch gekennzeichnet, dass** mindestens eine Kunststoffband (12) auf das rohrförmige Trägerbauteil (11) aufgewickelt und danach fest mit dem rohrförmigen Trägerbauteil verschweißt wird, ohne dabei die Orientierung des Kunststoffbands (12) in seiner Längsrichtung zu zerstören.

6. Verfahren nach einem der Ansprüche 1 bis 5, **dadurch gekennzeichnet, dass** mindestens zwei Lagen verstreckter in mindestens einer Richtung orientierter Kunststoffbänder (12) nacheinander, einander überdeckend auf das Trägerbauteil (11) aufgebracht und fest mit dem Trägerbauteil verschweißt werden.

7. Verfahren nach Anspruch 6, **dadurch gekennzeichnet, dass** mindestens zwei Lagen verstreckter in mindestens einer Richtung orientierter Kunststoffbänder (12) nacheinander, einander überdeckend auf das rohrförmige Trägerbauteil (11) aufgewickelt und danach jeweils mit dem rohrförmigen Trägerbauteil bzw. der darunter liegenden Verstärkungsschicht fest verschweißt werden.

8. Verfahren nach Anspruch 7, **dadurch gekennzeichnet, dass** mindestens zwei Lagen verstreckter in mindestens einer Richtung orientierter Kunststoffbänder (12) nacheinander jeweils in einem Winkel zur Rohrachse (13) im gegenläufigen Drehsinn einander überdeckend auf den rohrförmigen Träger (11) gewickelt werden.

9. Verfahren nach einem der Ansprüche 1 bis 4, **dadurch gekennzeichnet, dass** mindestens ein Kunststoffband (12) etwa in Längsrichtung auf die Oberfläche des rohrförmigen Trägerbauteils (11) aufgelegt wird und mit dem Trägerbauteil verschweißt wird.

10. Verfahren nach einem der Ansprüche 1 bis 9, **dadurch gekennzeichnet, dass** das mindestens eine Kunststoffband (12) und der als Trägerbauteil dienende zylindrische Rohrkern (11) aus dem gleichen Kunststoff bestehen.

11. Mehrschichtiges Rohr aus Kunststoff, **dadurch gekennzeichnet, dass** dieses nach einem Verfahren mit den Merkmalen eines der Ansprüche 1 bis 10 hergestellt wurde.

12. Rohr nach Anspruch 11, **dadurch gekennzeichnet, dass** dieses werkstoffhomogen oder weitgehend werkstoffhomogen aus chemisch gleichen oder ähnlichen Kunststoffen aufgebaut ist.

13. Rohr nach einem der Ansprüche 11 oder 12, **dadurch gekennzeichnet, dass** dieses ein mindestens dreischichtiges Rohr aus Kunststoff ist, dessen mittlere Schicht (14) die axiale Spannungskomponente der inneren Schicht (11) und/oder der äußeren Schicht bei Erwärmung (17) mindestens teilweise kompensiert.

## Claims

1. A method for producing a multilayer tube of plastic, comprising the application of at least one plastic band onto a carrier component made of plastic, wherein the at least one plastic band is welded to the carrier component after the application, wherein a cylindrical tube core (11), to which at least one reinforcement layer comprising the at least one plastic band (12) is applied, serves as carrier component, said plastic band consisting of a plastic, which has a negative heat expansion coefficient, wherein the at least one plastic band (12) is wound at an angle of 45° to the tube axis or flatter onto the cylindrical tube core (11), and the at least one plastic band (12) has received an orientation in at least one direction by means of stretching, wherein the degree of stretching of the at least one applied oriented plastic band (12) and the angle, in which the at least one plastic band is wound onto the cylindrical tube core (11), are chosen such that the axial stress component of the reinforcement layer or the sum of the axial stress components of the reinforcement layers at least partially compensate the axial stress component of the tube core layer or the sum of the axial stress components of the tube core layer and, if applicable, further tube layers in response to heating,
wherein the at least one plastic band (12) comprises at least one layer of a plastic, which is oriented highly in at least one direction, and the at least one plastic band (12) and the cylindrical tube core (11) consist of a chemically similar plastic.

2. The method according to claim 1, **characterized in that** the thickness ratio of the individual tube layers is chosen relative to one another such that the axial stress component of the reinforcement layer or the sum of the axial stress components of the reinforcement layers at least partially compensates the axial stress component of the tube core layer or the sum of the axial stress components of the tube core layer, and, if applicable, further tube layers, in response to heating.

3. The method according to claim 1 or 2, **characterized in that** the negative heat expansion of the plastic of the at least one plastic band (12) is reversible, that is, that the plastic expands again in response to cool-down.

4. The method according to one of claims 1 to 3, **characterized in that** the at least one plastic band (12) has received an orientation in at least one direction by means of a cold stretching after the extrusion of the plastic band, which preferably occurs in a temperature range of between approximately 10° and approximately 50°, more preferably between approximately 10° and approximately 20° below the melting temperature of the plastic.

5. The method according to one of claims 1 to 4, **characterized in that** at least one plastic band (12) is wound onto the tubular carrier component (11) and is then fixedly welded to the tubular carrier component, without thereby destroying the orientation of the plastic band (12) in its longitudinal direction.

6. The method according to one of claims 1 to 5, **characterized in that** at least two layers of stretched plastic bands (12), which are oriented in at least one direction, are applied consecutively to the carrier component (11) so as to overlap one another, and are fixedly welded to the carrier component.

7. The method according to claim 6, **characterized in that** at least two layers of stretched plastic bands (12), which are oriented in at least one direction, are wound onto the tubular carrier component (11) so as to overlap one another, and are then in each case fixedly welded to the tubular carrier component or to the reinforcement layer located therebelow, respectively.

8. The method according to claim 7, **characterized in that** at least two layers of stretched plastic bands (12), which are oriented in at least one direction, are wound consecutively onto the tubular carrier (11), in each case at an angle to the tube axis (13) in opposite direction of rotation so as to overlap one another.

9. The method according to one of claims 1 to 4, **characterized in that** at least one plastic band (12) is placed onto the surface of the tubular carrier component (11) approximately in longitudinal direction and is welded to the carrier component.

10. The method according to one of claims 1 to 9, **characterized in that** at least one plastic band (12) and the cylindrical tube core (11), which serves as carrier component, consist of the same plastic.

11. A multilayer tube of plastic, **characterized in that** the latter was produced according to a method comprising the features of one of claims 1 to 10.

12. The tube according to claim 11, **characterized in that** the latter is made in a material-homogenous or largely material-homogenous manner from chemically identical or similar plastics.

13. The tube according to one of claims 11 or 12, **characterized in that** the latter is an at least three-layer tube of plastic, the middle layer (14) of which at least partially compensates the axial stress component of the inner layer (11) and/or of the outer layer in response to heating (17).

## Revendications

1. Procédé pour la fabrication d'un tube multicouches en matière plastique comprenant l'application d'au moins une bande en matière plastique sur un composant support en matière plastique, dans lequel, après l'application, cette au moins une bande en matière plastique est soudée avec le composant support, dans lequel un noyau de tube cylindrique (11) sert de composant support sur lequel on applique au moins une couche de renforcement comprenant cette au moins une bande en matière plastique (12), laquelle se compose d'une matière plastique qui présente un coefficient de dilatation thermique négatif, dans lequel cette au moins une bande en matière plastique (12) est enroulée selon un angle de 45° par rapport à l'axe de tube, ou de manière plus plate, sur le noyau de tube cylindrique (11) et cette au moins une bande en matière plastique (12) ayant obtenu une orientation dans au moins une direction grâce à un étirage, dans lequel le degré d'étirage de cette au moins une bande en matière plastique (12) orientée et appliquée et l'angle selon lequel cette au moins une bande en matière plastique est enroulée sur le noyau de tube cylindrique (11) sont choisis d'une manière telle, que la composante de contrainte axiale de la couche de renforcement ou la somme des composantes de contraintes axiales des couches de renforcement compense en cas d'échauffement la composante de contrainte axiale de la couche de noyau de tube ou la somme des composantes de contrainte axiales de la couche de noyau de tube et le cas échéant d'autres couches de tube de façon au moins partielle,
dans lequel cette au moins une bande en matière plastique (12) comprend au moins une couche d'une matière plastique à haut degré d'orientation dans au moins une direction, et cette au moins une bande en matière plastique (12) et le noyau de tube cylindrique (11) se composant d'une matière plastique chimiquement similaire.

2. Procédé selon la revendication 1, **caractérisé en ce que** le rapport des épaisseurs entre les couches de tube individuelles est choisi d'une manière telle, que la composante de contrainte axiale de la couche de renforcement ou la somme des composantes de contrainte axiales des couches de renforcement compense, en cas d'échauffement, la composante de contrainte axiale de la couche de noyau de tube ou la somme des composantes de contrainte axiales de la couche de noyau de tube et le cas échéant d'autres couches de tube de façon au moins partielle.

3. Procédé selon la revendication 1 ou 2, **caractérisé en ce que** la dilatation thermique négative de la matière plastique de cette au moins une bande en matière plastique (12) est réversible, à savoir que la matière plastique se dilate de nouveau en cas de refroidissement.

4. Procédé selon l'une des revendications 1 à 3, **caractérisé en ce que** cette au moins une bande en matière plastique (12) a obtenu une orientation dans au moins une direction grâce à un étirage à froid après l'extrusion de la bande de matière plastique, lequel s'effectue de préférence dans une plage de températures comprise entre près de 10° et près de 50°, également de préférence comprise entre près de 10° et près de 20° en-deçà de la température de fusion de la matière plastique.

5. Procédé selon l'une des revendications 1 à 4, **caractérisé en ce qu'**au moins une bande de matière plastique (12) est enroulée sur le composant support en forme de tube (11) et est ensuite soudée de manière fixe avec le composant support en forme de tube sans ce faisant annuler l'orientation de la bande en matière plastique (12) concernant sa direction en longueur.

6. Procédé selon l'une des revendications 1 à 5, **caractérisé en ce qu'**au moins deux couches de bandes en matière plastique (12) étirées, orientées dans au moins une direction sont appliquées successivement en se recouvrant les unes les autres sur le composant support (11) et sont soudées de manière fixe avec le composant support.

7. Procédé selon la revendication 6, **caractérisé en ce qu'**au moins deux couches de bandes en matière plastique (12) étirées, orientées dans au moins une direction sont enroulées successivement en se recouvrant les unes les autres sur le composant support en forme de tube (11) et sont ensuite respectivement soudées de manière fixe avec le composant support en forme de tube ou la couche de renforcement située en-dessous.

8. Procédé selon la revendication 7, **caractérisé en ce qu'**au moins deux couches de bandes en matière plastique (12) étirées, orientées dans au moins une direction sont enroulées successivement respectivement selon un angle par rapport à l'axe de tube (13) dans le sens de rotation contraire en se recouvrant les unes les autres sur le support en forme de tube (11).

9. Procédé selon l'une des revendications 1 à 4, **caractérisé en ce qu'**au moins une bande en matière plastique (12) est apposée sensiblement en direction en longueur sur la surface du composant support (11) en forme de tube et est soudée avec le composant support.

10. Procédé selon l'une des revendications 1 à 9, **caractérisé en ce que** cette au moins une bande en matière plastique (12) et le noyau de tube cylindrique (11) servant de composant support se composent de la même matière plastique.

11. Tube multicouches en matière plastique, **caractérisé en ce que** celui-ci a été fabriqué selon un procédé avec les caractéristiques de l'une des revendications 1 à 10.

12. Tube selon la revendication 11, **caractérisé en ce que** celui-ci est configuré, avec une homogénéité des matériaux ou de manière essentiellement à homogénéité des matériaux, à base de matières plastiques chimiquement identiques ou similaires.

13. Tube selon l'une des revendications 11 ou 12, **caractérisé en ce que** celui-ci est un tube en matière plastique à au moins trois couches dont la couche du milieu (14) compense au moins partiellement la composante de contrainte axiale de la couche intérieure (11) et/ou de la couche extérieure en cas d'échauffement (17).
